# EUROPEAN PATENT SPECIFICATION

(11) **EP 3 736 163 B1**
(45) Date of publication and mention of the grant of the patent: **25.01.2023**
(21) Application number: 19173590.1
(22) Date of filing: 09.05.2019
(51) Int. Cl.: B60K 37/06, B62D 1/04

(54) **A CONTEXTUAL BASED USER INTERFACE**
KONTEXTBASIERTE BENUTZERSCHNITTSTELLE
INTERFACE UTILISATEUR BASÉE SUR LE CONTEXTE

(43) Date of publication of application: 11.11.2020
(73) Proprietor: Volvo Car Corporation, 40531 Göteborg (SE)
(72) Inventor: SEDAGHAT, Alborz, 417 60 Göteborg (SE); GÖTHLIN, Jonas, 423 43 Torslanda (SE); GORDH, Mikael, 442 50 Ytterby (SE)
(74) Representative: Kransell & Wennborg KB

(56) References cited:
- EP-A1- 3 171 249
- KR-A- 20180 105 065
- US-A1- 2005 024 342
- US-A1- 2019 079 717
- US-B2- 10 120 567

## Description

### TECHNICAL FIELD

The present disclosure relates to a control interface system adapted to provide control of a vehicle subsystem to a driver of the vehicle. The present disclosure further relates to a method for controlling a vehicle subsystem through a control interface system.

### BACKGROUND

As vehicles are being equipped with more devices and functions, the required amount of user input from the driver increases. One examples of such user input devices are related to control of entertainments systems such as volume control, radio channel selection, track selection, audio input source selection, etc. Other exemplary user input devices are adapted to control cruise control functions, rear view mirror settings, navigation system functions, etc.

The number of devices and functions that need user input seems to continuously increase with the technology advancement in the vehicle industry and with the demand for more advanced functions. Furthermore, there is a desire and demand to not distract the driver while driving, which has led to that many user input devices are arranged on the steering wheel, close to the driver's hands. In this way, the driver may easily reach the user input devices without being unnecessarily distracted. However, there is limited space on the steering wheel of a vehicle. In addition, too many user input devices may confuse the driver which may lead to distraction.

Accordingly, there is a need for an improved user interface that allows the driver to control functions in a vehicle with less distraction.

The document EP 3 171 249 A1 has been considered in particular.

### SUMMARY

The disclosed subject matter generally relates to a contextual based control interface system for a driver of a vehicle.

The invention is defined by the subject-matter of claim 1, disclosing a control interface system.

Furthermore, the control interface system provides for intuitive control of the input device which comprises at least two user input zones adapted to receive user input. This advantage is provided by that the, in the display device, displayed selectable options are visually distributed in the same way as the at least two user input zones. Thus, the user may see the selectable options in the display, and geometrically navigate his/her finger across the user input zones of the input device guided by the shown layout of the selectable options in the display. In this way, the user does not have to direct his/her line of sight directly onto the input device in order to understand how to move the finger to select one of the selectable options.

With embodiments of the present invention, a first user input on the user input zones of the input device causes a display device to display selectable options related to a present usage context of several usage contexts. This first user input may be that the user places a finger on the input device. In response to a second user input on one of the user input zones, a vehicle sub-system may be controlled according to the selected option.

The first user input may be an initial touch input, and the second user input may be a forced touch provided as an increased force compared to the initial touch input. Thus, the control interface may advantageously be triggered by a first touch on the input device, and the user may select the preferred option by increasing the force on the corresponding input zone, without lifting the finger from the input device.

In one preferred embodiment, the user input zones are separated by ridges or grooves. The ridges or grooves are 3-dimensional structures that provide guidance for the user's finger when moving it across the input device.

In some embodiments, the input device includes a haptic feedback device, wherein the second user input is a force touch, whereby the haptic feedback device input is configured to generate a haptic feedback in response to the force touch. Thereby the user's receives feedback that an option was selected, which further reduces driver distraction since the driver does not have to look away, e.g. on the screen, to confirm that an option was selected.

Further features of, and advantages with, embodiments of the present disclosure will become apparent when studying the appended claims and the following description. The skilled person realize that different features of the present disclosure may be combined to create embodiments other than those described in the following, without departing from the scope of the present disclosure.

### BRIEF DESCRIPTION OF DRAWINGS

These and other aspects of the present disclosure will now be described in more detail, with reference to the appended drawings showing example embodiments of the invention, wherein:
FIG. 1 conceptually illustrates a control interface system according to embodiments of the present disclosure;
FIG. 2 conceptually illustrates an input device and selectable options shown in a display according to embodiments of the present disclosure;
FIG. 3 conceptually illustrates an input device and selectable options shown in a display according to embodiments of the present disclosure;
FIG. 4 conceptually illustrates a control interface system according to embodiments of the present disclosure;
FIG. 5A-B conceptually illustrates a use case for an example control interface system;
FIG. 6 A-B conceptually illustrates a use case for an example control interface system;
FIG. 7 conceptually illustrates an example input device;
FIG. 8 conceptually illustrates a curve representing the force applied on an input zone of an input device versus time; and
FIG. 9 is a flow-chart of method steps according to embodiments of the present disclosure.

### DETAILED DESCRIPTION

In the present detailed description, various embodiments of a control interface according to the present disclosure are described. However, this invention may be embodied in many different forms and should not be construed as limited to the embodiments set forth herein; rather, these embodiments are provided for thoroughness and completeness, and to fully convey the scope of the present disclosure to the skilled person. In some instances, well known structures and devices are shown in block diagram form in order to avoid obscuring the novelty of the exemplary embodiments presented herein. Like reference characters refer to like elements throughout.

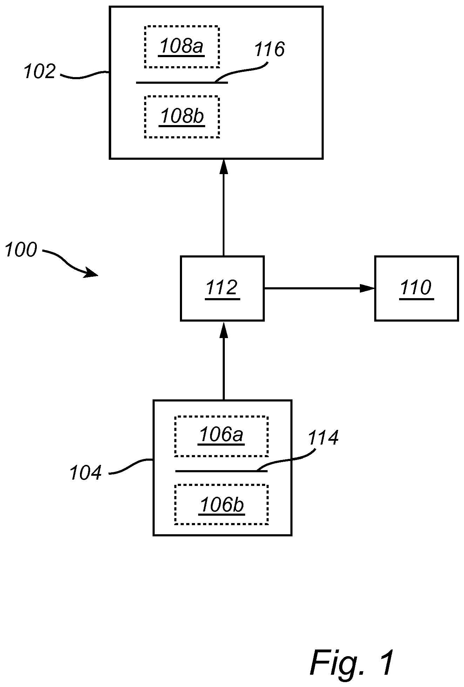

Fig. 1 conceptually illustrates a control interface system 100 for a driver of a vehicle. The control interface system 100 comprises a display device 102 arranged in the field of view of the driver. An input device 104 is configured to communicate with the display device 102. The input device 104 includes at least two user input zones 106a-b adapted to receive user input. The display device 102 is responsive to a control signal indicative of a first user input on any one of the user input zones 106a-b to display selectable options 108a-b related to one present usage context of several available present usage contexts. The displayed selectable options 108a-b are visually distributed in the same way as the at least two user input zones 106a-b. Here, in this example embodiment the two user input zones 106a-b and the corresponding selectable options 108a-b are vertically disposed. In response to a second user input, subsequent to the first user input, on one of the user input zones 106a-b corresponding to one of the selectable options, an instruction signal indicative of the selected option is provided to a vehicle sub-system 110.

A control unit 112 is shown connected to the input device 104 and to the display device 102. The control unit 112 may thus receive a control signal from the input device 104 indicative of a first user input on any one of the at least two user input zones of the input device 104, and control the display device 102 to display the selectable options 108a-b. Further, the control unit 112 is connected to vehicle sub-system 110. The control unit 110 may generate a control signal which is transmitted to the vehicle sub-system 110 for controlling the vehicle subsystem according to the selected option, e.g. 108a or 108b.

The inventors realized to provide a contextual based control interface system which allows the user to control more than one vehicle sub-system with a single input device. Furthermore, the inventors realized that for the contextual based interface to provide an intuitive and user-friendly control of vehicle sub-systems, the selectable options are displayed in the field of view of the driver in the same layout as the corresponding user input zones of the input device. In other words, if the user provides the second user input in input zone 106b, i.e. the lower of the input zones, the user selects the option 108b, the lower of the displayed selectable options. If the user provides the second user input in input zone 106a, i.e. the upper of the input zones, the user selects the option 108a, the upper of the displayed selectable options.

With the proposed control interface system, the number of switches and other input systems may be reduced in already limited spaces in the vehicle interior. Instead of having one switch for controlling each vehicle sub-system, the proposed control interface system comprises the input device which man be used for providing instructions to more than one vehicle sub-system. In addition, for reduced complexity and increased user-friendliness for using the contextual based control interface system, the selectable options for each usage context arc displayed in the display device in a layout that mimics that of the input device. Thereby, a user may easily navigate across the input zones of the input device without the need to focus his/her sight on the input device itself which may cause distraction.

To further facilitate for a user to navigate to a desired input zone of the input device corresponding to a selectable option, the user input zones may be separated by ridges or grooves, here a single ridge/groove 114 is conceptually illustrated. The ridge or groove is a three-dimensional structure which enables for the user to feel, by touch, the edge or separation between the input zones. The ridge/groove 114 preferably includes a straight segment. In addition, the displayed selectable options are separated by a corresponding displayed line 116 to better distinguish the selectable options 108a-b.

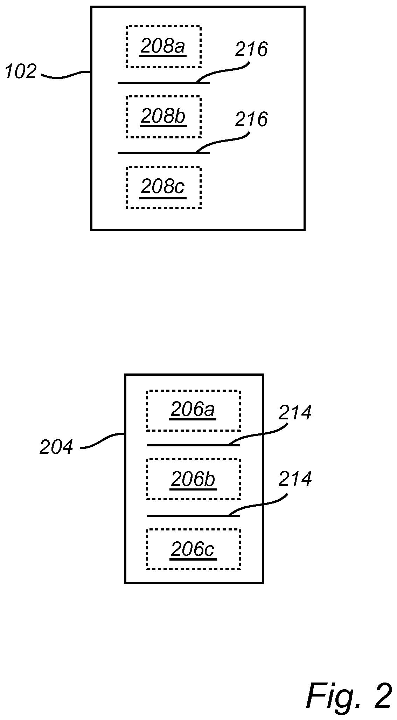

The number of user input zones and their distribution may vary depending on the specific implementation. In one embodiment, as conceptually illustrated in fig. 2, the input device 204 includes three vertically disposed user input zones 206a, 206b, and 206c. Consequently, the user selectable options may be displayed with the same layout, e.g. three vertically disposed selectable options 208a, 208b, and 208c. Similar to the above case with two user input zones, if the user provides the second user input in input the center zone 206b, the user selects the centrally displayed option 208b. Preferably, the vertically disposed user input zones 206a-c are separated by horizontal ridges/grooves 214, here conceptually illustrated. The displayed selectable options 208a-c are separated by corresponding displayed lines 216 to better distinguish the selectable options 208a-c.

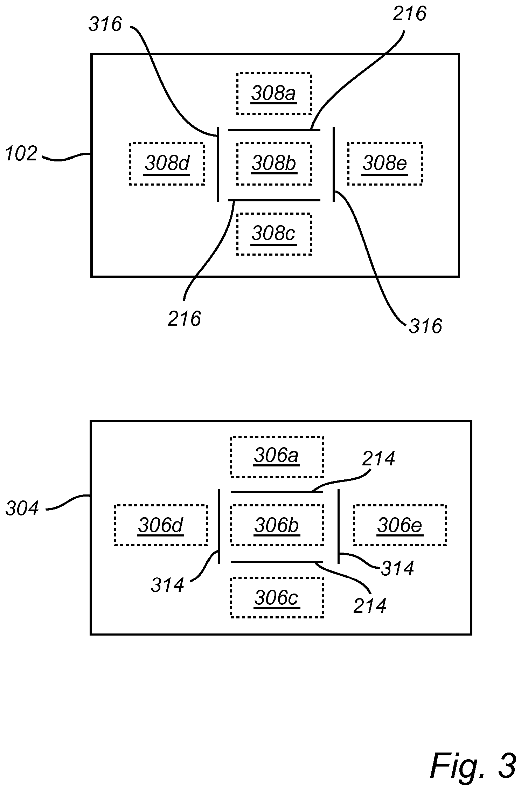

Another possible implementation is conceptually illustrated in fig. 3, where the input device 304 includes three vertically disposed user input zones 306a, 306b, and 306c, and three horizontally disposed user input zones 306d, 306b, and 306e. Consequently, the user selectable options may be displayed with the same layout, e.g. three vertically disposed selectable options 308a, 308b, and 308c, and three horizontally disposed user selectable options 308d, 308b, and 308e. For the sake of completeness, if the user provides the second user input in input the left zone 306d, the user selects the left displayed option 308d. if the user provides the second user input in input the right zone 306e, the user selects the right displayed option 308e. Preferably, the vertically disposed user input zones 306a-c are separated by horizontal ridges/grooves 214, and the horizontally disposed user input zones 306d, 306b, 306e, are separated by vertical ridges/grooves 314, here the ridges are conceptually illustrated.

Although the number of selectable options match the number input zones in the above examples, the number of selectable options may not always match the number of input zones of the input device. For example, the number of input zones may be three, but the number of selectable options that are displayed may be less than three. However, the displayed selectable options are visually distributed in the same way as the corresponding input zones of the input device.

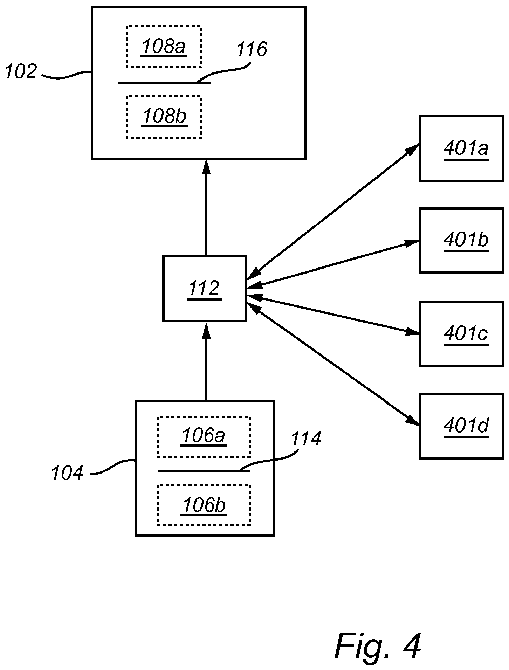

The present usage context may be determined from which vehicle sub-system is activated for adjustment by the user. Fig. 4 conceptually illustrates the control unit 112 connected to the display device 102 and input device 104 of fig. 1. The control unit 112 is further connected to multiple vehicle sub-systems 401a-d. The control unit 112 may receive a signal from each of the vehicle sub-systems 401a-d that is indicative of that a present vehicle sub-system has been selected for control. For example, if the sub-system 401a is selected by the user by providing input via a separate input means, a signal is transmitted to the control unit 112 which sends a signal to the display device 102 so that the selectable options 108a-b for the present usage context, i.e. the selectable options for the vehicle sub-system 401a, are shown in the display device 102.

The present usage context can be determined from multiple input means. For example, the Center Stack Display can be used the select an option to control the brightness of the screen, the present usage context would then change, and the input zones 106a-b would be operable to increase/decrease brightness of the screen. In the same way may a voice command be used to trigger the present usage context to change to e.g. mirror adjustment mode, then the input zones 106a-b would be operable to control the side mirrors angle. There may exist a default context for each zone, such as to activate a voice assistant system.

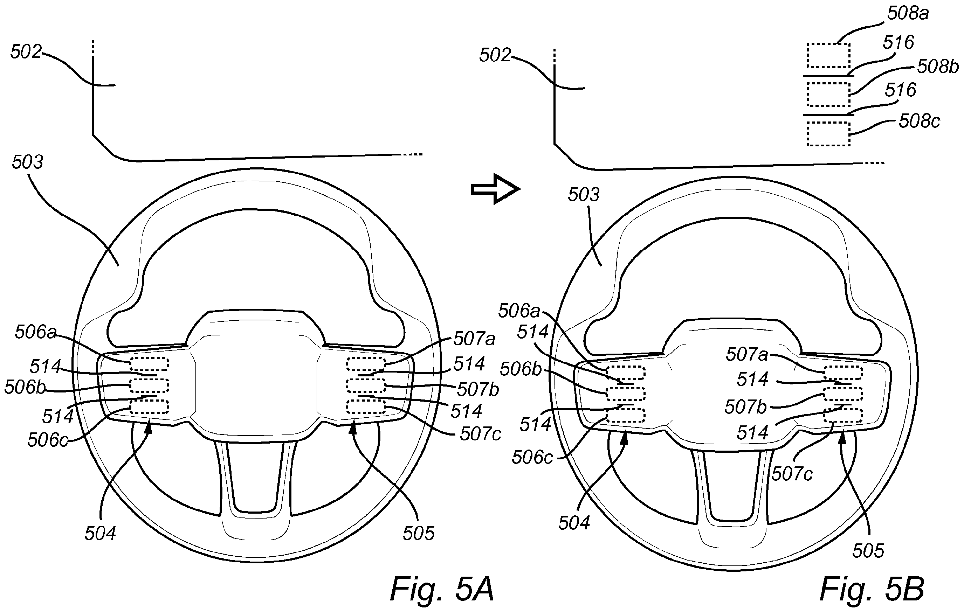

Fig. 5A-B illustrates a use case for an example control interface system including two input device devices 504 and 505 integrated in a steering wheel 503. In the field of view for the driver is a display, e.g. a head-up display device 502 arranged. Each of the input devices 504 and 505 includes respective vertically separated input zones 506a-c and 507a-c separated by horizontal ridges/grooves 514. In this example use case, the user may provide a first input on the right-hand side input device 505 by touching any one of the input zones 507a-c. As a result, selectable options 508a-c are displayed in the head-up display device 502 geometrically distributed in the same way as the input zones 507a-c as shown in fig. 5B. In other words, the selectable options 508a-c are vertically disposed and separated by displayed lines 516.

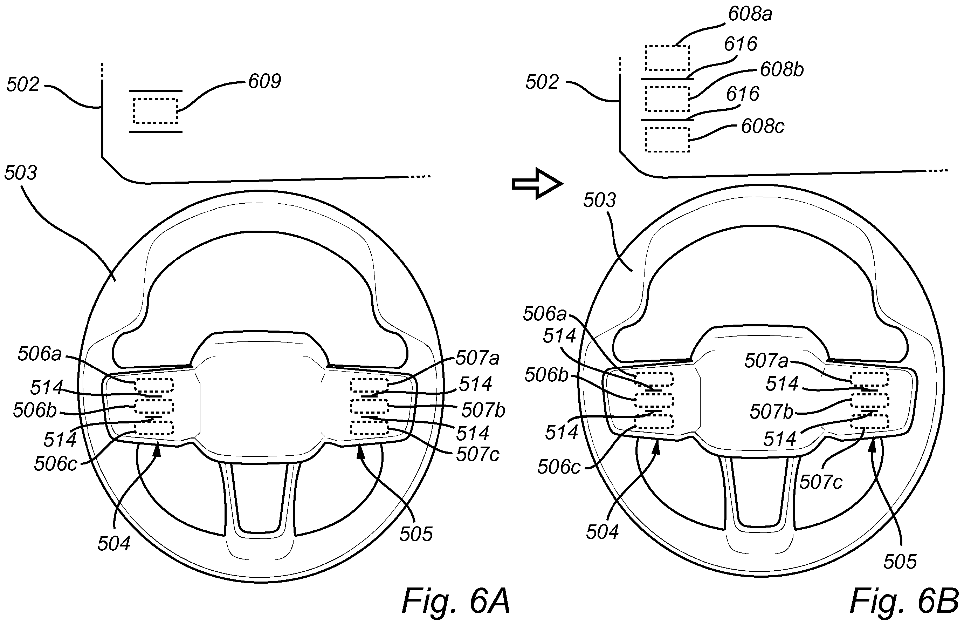

Fig. 6A-B illustrates another use case for an example control interface system including two input device devices 504 and 505 integrated in a steering wheel 503. Here the initial touch on the left-hand side input device 504 has resulted in a selectable option 609 to be shown in the display device 502. The user may select this option by pressing on the input zone 506b which corresponds to the option 609. This example selectable option is may be to activate cruise control. As shown in fig. 6B, when the user has selected the option 609, the selectable options 608a-c are now displayed. The displayed selectable options 608a-c may relate to controlling the cruise control. For example, the option 608a, e.g. increase speed, may be selected by pressing on the input zone 506a. The option 608c, e.g. decrease speed, may be selected by pressing on the input zone 506c. The option 608b, e.g. cancel cruise control, may be selected by pressing on the input zone 506b.

The input device of the various embodiments described here may be a capacitive input device. Such capacitive input device operates by sensing the capacitive coupling between an input surface and the finger touching or approaching the input surface. Each of the input zones may include a respective input surface adapted for receiving a user touch.

The first user input may be an initial touch input, and the second user input is a forced touch provided as an increased force compared to the initial touch input. Thus, a touch on the input device triggers the control interface system to display the selectable options. Once the user presses harder on one of the input zones, i.e. with a force exceeding a predetermined threshold, the option is selected. For this, a force feedback device may be arranged which provides a signal when the pressing force exceed the threshold.

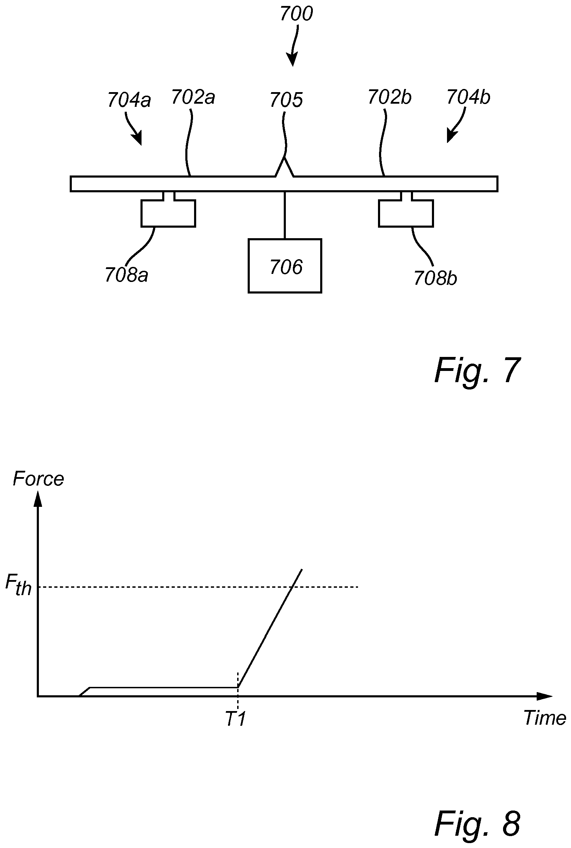

Fig. 7 conceptually illustrates an example input device 700 including input surfaces 702a and 702b associated with respective input zones 704a and 704b separated by a ridge 705. Sensing circuitry 706 connected to the input surfaces is adapted to determine the capacitive coupling between the finger of the user and the present input surface 702a-b that the user is touching. Such sensing circuitries are considered known to the skilled person and often include amplifiers and capacitors connected to the input surface although many different variations of such sensing circuitry are possible and within the scope of the appended claims. A detection signal from the sensing circuitry provides an indication of the capacitive coupling between the finger and the present input surface 702a or 702b. In this way, the control interface system can determine which of the input surfaces 702a-b that the user is touching. The detection signal may be provided to a control unit of the control interface system.

Further, the input device 700 includes a force feedback device 708a-b for each of the input zones 704a-b. Once the user applies force with sufficient magnitude on one of the input surfaces 702a and 702b, the respective force feedback device 708a-b is triggered and supplies a signal that indicates to a control unit of the control interface system that an option has been selected, the option is related to the input zone of the respective force feedback device 708a-b. Accordingly, the capacitive touch system provides information about where the user is touching the input device and the force feedback device that the user has selected the function corresponding to the touched input zone.

In embodiments, the input device includes a haptic feedback device, wherein the second user input is a forced touch, whereby the haptic feedback device input is configured to generate a haptic feedback in response to the forced touch. Preferably, the force feedback device includes or at least controls the haptic feedback device.

There are various ways to implement the force feedback with a haptic feedback function, and only some possible examples will now be briefly described. For example, the force feedback devices 708a-b may include sensors for sensing the applied force, and e.g. a piezo or solenoid based haptic feedback device which is triggered when the force exceeds a threshold. Another option is to include a set of micro switches in the force feedback devices 708a-b which may provide both for a force feedback and haptic feedback. A further option is to only include a single microswitch combined for both the input zones 704a-b and use the capacitive sensing sensed by the sensing circuitry for determining which of the input zones was presently touched. A micro switch solution may provide haptic feedback with a passive system which is less costly than giving haptic feedback with an active system.

Fig. 8 conceptually illustrates a curve representing the force applied on an input zone of an input device versus time, in an exemplary manner. Initially, until time T1 the user is touching the input device and possibly navigating across the input zones. At time T1 the user increases the applied force to select one of the selectable options. Once the user presses with a force that exceeds the threshold Fₜₕ, the force feedback device is triggered to send signal to a control unit for selecting the option associated with the touched input zone. Further, the force feedback device may also provide haptic feedback once the applied force exceeds the threshold Fₜₕ.

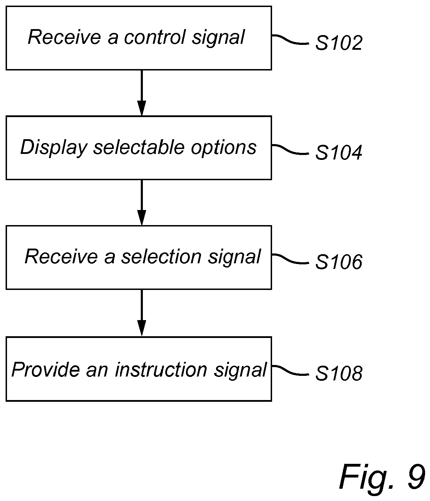

Fig. 9 is a flow-chart of method steps according to embodiments of the present disclosure. In a first step S102, receiving a control signal indicative of a first user input on any one of at least two user input zones of an input device. Subsequently, in step S104, displaying selectable options related to a present usage context on a display device. The selectable options are visually distributed in the display in the same way as the at least two user input zones. In subsequent step S106, receiving a selection signal indicative of a selected option, and in step S108, providing an instruction signal to the vehicle subsystem for controlling the vehicle subsystem according to the selected option.

The displayed selectable options that are related to a present usage context may be the selectable options that are available for a presently selected vehicle sub-system. The present usage context may be related to the presently selected vehicle sub-system.

The communication between the various components of the control interface or to and/or from the control unit may be hardwired or may use other known electrical connection techniques, or wireless networks, such as known in the art such as via CAN-buses, Bluetooth, Wifi, 3G, 4G, 5G, etc.

The present disclosure also relates to a computer program product comprising a computer readable medium having stored thereon computer program means for controlling a control interface system for a driver of a vehicle, wherein the computer program product comprises: code for evaluating a control signal indicative of a first user input on any one of at least two user input zones of an input device, code for controlling a display device to display selectable options related to a present usage context on a display device, the selectable options are visually distributed in the display in the same way as the at least two user input zones, code for evaluating a selection signal indicative of a selected option, and code for generating an instruction signal for controlling the vehicle subsystem according to the selected option.

The present disclosure also relates to a vehicle comprising the control interface according to any one of the herein disclosed embodiments or derivable from the herein disclosed embodiments.

A control unit may include a microprocessor, microcontroller, programmable digital signal processor or another programmable device, as well as be embedded into the vehicle/power train control logic/hardware. The control unit may also, or instead, include an application-specific integrated circuit, a programmable gate array or programmable array logic, a programmable logic device, or a digital signal processor. Where the control unit includes a programmable device such as the microprocessor, microcontroller or programmable digital signal processor mentioned above, the processor may further include computer executable code that controls operation of the programmable device. The control unit may comprise modules in either hardware or software, or partially in hardware or software and communicate using known transmission buses such as CAN-bus and/or wireless communication capabilities.

A control unit of the present disclosure is generally known as an ECU, electronic control unit.

The person skilled in the art realizes that the present invention by no means is limited to the preferred embodiments described above.

In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measured cannot be used to advantage. Any reference signs in the claims should not be construed as limiting the scope.

It is to be recognized that depending on the example, certain acts or events of any of the techniques described herein can be performed in a different sequence, may be added, merged, or left out altogether (e.g., not all described acts or events are necessary for the practice of the techniques). Moreover, in certain examples, acts or events may be performed concurrently, e.g., through multi-threaded processing, interrupt processing, or multiple processors, rather than sequentially.

In one or more examples, the functions described may be implemented in hardware, software, firmware, or any combination thereof. If implemented in software, the functions may be stored on or transmitted over as one or more instructions or code on a computer-readable medium and executed by a hardware-based processing unit. Computer-readable media may include computer-readable storage media, which corresponds to a tangible medium such as data storage media, or communication media including any medium that facilitates transfer of a computer program from one place to another, e.g., according to a communication protocol. In this manner, computer-readable media generally may correspond to (1) tangible computer-readable storage media which is non-transitory or (2) a communication medium such as a signal or carrier wave. Data storage media may be any available media that can be accessed by one or more computers or one or more processors to retrieve instructions, code and/or data structures for implementation of the techniques described in this disclosure. A computer program product may include a computer-readable medium.

By way of example, and not limitation, such computer-readable storage media can comprise RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer. Also, any connection is properly termed a computer-readable medium. For example, if instructions are transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. It should be understood, however, that computer-readable storage media and data storage media do not include connections, carrier waves, signals, or other transitory media, but are instead directed to non-transitory, tangible storage media. Disk and disc, as used herein, includes compact disc (CD), laser disc, optical disc, digital versatile disc (DVD), and Blu-ray disc, where disks usually reproduce data magnetically, while discs reproduce data optically with lasers. Combinations of the above should also be included within the scope of computer-readable media.

Instructions may be executed by one or more processors, such as one or more digital signal processors (DSPs), general purpose microprocessors, application specific integrated circuits (ASICs), field programmable gate arrays (FPGAs), complex programmable logic devices (CPLDs), or other equivalent integrated or discrete logic circuitry. Accordingly, the term "processor," as used herein may refer to any of the foregoing structure or any other structure suitable for implementation of the techniques described herein. In addition, in some aspects, the functionality described herein may be provided within dedicated hardware and/or software modules. Also, the techniques could be fully implemented in one or more circuits or logic elements.

The techniques of this disclosure may be implemented in a wide variety of devices or apparatuses, including an integrated circuit (IC) or a set of ICs (e.g., a chip set). Various components, modules, or units are described in this disclosure to emphasize functional aspects of devices configured to perform the disclosed techniques, but do not necessarily require realization by different hardware units. Rather, as described above, various units may be combined in a hardware unit or provided by a collection of interoperative hardware units, including one or more processors as described above, in conjunction with suitable software and/or firmware.

## Claims

1. A control interface system adapted to provide control of a vehicle subsystem to a driver of a vehicle, the control interface system comprises:
a display device arranged in the field of view of the driver;
an input device integrated in a steering wheel and configured to communicate with the display device, the input device includes at least two user input zones adapted to receive user input, wherein,
the display device is responsive to a control signal indicative of a first user input on any one of the user input zones to display selectable options related to one present usage context of several available present usage contexts,
the control interface system is **characterised in that** the displayed selectable options are visually distributed to mimic the layout of the at least two user input zones of the input device, wherein
in response to a second user input, subsequent to the first user input, on one of the user input zones corresponding to one of the selectable options, an instruction signal indicative of the selected option is provided to a vehicle sub-system.

2. The control interface system according to claim 1, wherein the input device includes three vertically disposed user input zones.

3. The control interface system according to claim 1 or 2, wherein the input device includes three horizontally disposed user input zones.

4. The control interface system according to any one of the preceding claims, wherein adjacent user input zones are separated by ridges or grooves.

5. The control interface system according to claim 4, wherein horizontally disposed user input zones are separated by vertical ridges or grooves, and vertically disposed user input zones are separated by horizontal ridges or grooves.

6. The control interface system according to any one of the preceding claims, wherein the present usage context is determined based on a user selected function.

7. The control interface according to any one of the preceding claims, wherein the first user input is an initial touch input, and the second user input is a force touch provided as an increased force compared to the initial touch input.

8. The control interface system according to any one of the preceding claims, wherein the input device includes a haptic feedback device, wherein the second user input is a force touch, whereby the haptic feedback device input is configured to generate a haptic feedback in response to the forced touch.

9. The control interface system according to any one of the preceding claims, wherein the display device is a head-up display or a separate driver interface module display.

10. A method for controlling a vehicle subsystem through a control interface system, the method comprising:
receiving a control signal indicative of a first user input on any one of at least two user input zones of an input device integrated in a steering wheel,
displaying selectable options related to a present usage context on a display device, the selectable options are visually distributed in the display to mimic the layout of the the at least two user input zones of the input device,
receiving a selection signal indicative of a selected option, and
providing an instruction signal to a vehicle subsystem related to the present usage context for controlling the vehicle subsystem according to the selected option.

11. The method according to claim 10, comprising:
receiving a context signal indicative of the present usage context of the vehicle subsystems, and
selecting the selectable options available for the present usage context, whereby the selectable options are displayed.

12. A control unit configured to:
receive a control signal indicative of a first user input on any one of at least two user input zones of an input device integrated in a steering wheel,
control a display device to display selectable options related to a present usage context on a display device, the selectable options are visually distributed in the display to mimic the layout of the at least two user input zones of the input device,
receive a selection signal indicative of a selected option, and
provide an instruction signal to the vehicle subsystem for controlling the vehicle subsystem according to the selected option.

13. The control unit according to claim 12, configured to:
receive a context signal indicative of the present usage context of the vehicle subsystems, and
evaluate the context signal to select the selectable options available for the present usage context, whereby the selectable options are displayed.

14. A computer program product comprising a computer readable medium having stored thereon computer program means for controlling a control interface system for a driver of a vehicle according to any one of claims 1 to 9, wherein the computer program product comprises:
code for evaluating a control signal indicative of a first user input on any one of at least two user input zones of an input device integrated in a steering wheel,
code for controlling a display device to display selectable options related to a present usage context on a display device, the selectable options are visually distributed in the display to mimic the layout of the at least two user input zones of the input device,
code for evaluating a selection signal indicative of a selected option, and
code for generating an instruction signal for controlling the vehicle subsystem according to the selected option.

## Patentansprüche

1. Steuerschnittstellensystem, das dafür eingerichtet ist, einem Fahrer eines Fahrzeugs die Steuerung eines Fahrzeugteilsystems bereitzustellen, wobei das Steuerschnittstellensystem folgende Elemente umfasst:
eine Anzeigevorrichtung, die im Sichtfeld des Fahrers angeordnet ist;
eine Eingabevorrichtung, die in ein Lenkrad integriert ist und dafür ausgelegt ist, mit der Anzeigevorrichtung zu kommunizieren, wobei die Eingabevorrichtung mindestens zwei Benutzereingabezonen beinhaltet, die dazu eingerichtet sind, Benutzereingaben zu empfangen,
wobei die Anzeigevorrichtung auf ein Steuersignal, das eine erste Benutzereingabe auf einer beliebigen der Benutzereingabezonen kennzeichnet, zum Anzeigen von auswählbaren Optionen reagiert, die sich auf einen aktuellen Nutzungskontext von mehreren verfügbaren aktuellen Nutzungskontexten beziehen,
wobei das Steuerschnittstellensystem **dadurch gekennzeichnet ist, dass** die angezeigten auswählbaren Optionen visuell so verteilt sind, dass sie das Layout der mindestens zwei Benutzereingabezonen der Eingabevorrichtung nachahmen, wobei als Reaktion auf eine zweite Benutzereingabe, die auf die erste Benutzereingabe folgt, auf einer der Benutzereingabezonen, die einer der auswählbaren Optionen entspricht, ein Anweisungssignal, das die ausgewählte Option kennzeichnet, für ein Fahrzeugteilsystem bereitgestellt wird.

2. Steuerschnittstellensystem nach Anspruch 1, wobei die Eingabevorrichtung drei vertikal eingerichtete Benutzereingabezonen beinhaltet.

3. Steuerschnittstellensystem nach Anspruch 1 oder 2, wobei die Eingabevorrichtung drei horizontal eingerichtete Benutzereingabezonen beinhaltet.

4. Steuerschnittstellensystem nach einem der vorhergehenden Ansprüche, wobei benachbarte Benutzereingabezonen durch Rippen oder Rillen getrennt sind.

5. Steuerschnittstellensystem nach Anspruch 4, wobei horizontal eingerichtete Benutzereingabezonen durch vertikale Rippen oder Rillen und vertikal eingerichtete Benutzereingabezonen durch horizontale Rippen oder Rillen getrennt sind.

6. Steuerschnittstellensystem nach einem der vorhergehenden Ansprüche, wobei der aktuelle Nutzungskontext auf der Grundlage einer vom Benutzer ausgewählten Funktion bestimmt wird.

7. Steuerschnittstellensystem nach einem der vorhergehenden Ansprüche, wobei die erste Benutzereingabe eine anfängliche Berührungseingabe ist und die zweite Benutzereingabe eine kraftvolle Berührung ist, die als eine erhöhte Kraft im Vergleich zur anfänglichen Berührungseingabe bereitgestellt wird.

8. Steuerschnittstellensystem nach einem der vorhergehenden Ansprüche, wobei die Eingabevorrichtung eine Vorrichtung für haptische Rückkopplung beinhaltet, wobei die zweite Benutzereingabe eine kraftvolle Berührung ist, wobei die Eingabe der Vorrichtung für haptische Rückkopplung dafür ausgelegt ist, eine haptische Rückkopplung als Reaktion auf die kraftvolle Berührung zu erzeugen.

9. Steuerschnittstellensystem nach einem der vorhergehenden Ansprüche, wobei die Anzeigevorrichtung eine Head-up-Anzeige oder ein separate Fahrerschnittstellenmodulanzeige ist.

10. Verfahren zum Steuern eines Fahrzeugteilsystems über ein Steuerschnittstellensystem, wobei das Verfahren folgende Vorgänge umfasst:
Empfangen eines Steuersignals, das eine erste Benutzereingabe auf einer beliebigen von mindestens zwei Benutzereingabezonen einer in ein Lenkrad integrierten Eingabevorrichtung kennzeichnet,
Anzeigen von auswählbaren Optionen, die sich auf einen aktuellen Nutzungskontext beziehen, auf einer Anzeigevorrichtung, wobei die auswählbaren Optionen visuell auf der Anzeige zum Nachahmen des Layouts der mindestens zwei Benutzereingabezonen der Eingabevorrichtung verteilt sind,
Empfangen eines Auswahlsignals, das eine ausgewählte Option kennzeichnet, und
Bereitstellen eines Anweisungssignals für ein Fahrzeugteilsystem, das sich auf den aktuellen Nutzungskontext bezieht, zum Steuern des Fahrzeugteilsystems entsprechend der gewählten Option.

11. Verfahren nach Anspruch 10, umfassend:
Empfangen eines Kontextsignals, das den aktuellen Nutzungskontext der Fahrzeugteilsysteme kennzeichnet, und
Auswählen der für den aktuellen Nutzungskontext verfügbaren auswählbaren Optionen, wobei die auswählbaren Optionen angezeigt werden.

12. Steuereinheit, die für folgende Vorgänge ausgelegt ist:
Empfangen eines Steuersignals, das eine erste Benutzereingabe auf einer beliebigen von mindestens zwei Benutzereingabezonen einer in ein Lenkrad integrierten Eingabevorrichtung kennzeichnet,
Steuern einer Anzeigevorrichtung zum Anzeigen von auswählbaren Optionen, die sich auf einen aktuellen Nutzungskontext beziehen, auf einer Anzeigevorrichtung, wobei die auswählbaren Optionen visuell auf der Anzeige zum Nachahmen des Layouts der mindestens zwei Benutzereingabezonen der Eingabevorrichtung verteilt sind,
Empfangen eines Auswahlsignals, das eine ausgewählte Option kennzeichnet, und
Bereitstellen eines Anweisungssignals für das Fahrzeugteilsystem zum Steuern des Fahrzeugteilsystems entsprechend der gewählten Option.

13. Steuereinheit nach Anspruch 12, die für folgende Vorgänge ausgelegt ist:
Empfangen eines Kontextsignals, das den aktuellen Nutzungskontext der Fahrzeugteilsysteme kennzeichnet, und
Auswerten des Kontextsignals zum Auswählen der für den aktuellen Nutzungskontext verfügbaren auswählbaren Optionen, wobei die auswählbaren Optionen angezeigt werden.

14. Computerprogrammprodukt, umfassend ein computerlesbares Medium, auf dem Computerprogrammmittel zum Steuern eines Steuerschnittstellensystems für einen Fahrer eines Fahrzeugs nach einem der Ansprüche 1 bis 9 gespeichert sind, wobei das Computerprogrammprodukt umfasst:
Code zum Auswerten eines Steuersignals, das eine erste Benutzereingabe auf einer beliebigen von mindestens zwei Benutzereingabezonen einer in ein Lenkrad integrierten Eingabevorrichtung kennzeichnet,
Code zum Steuern einer Anzeigevorrichtung zum Anzeigen von auswählbaren Optionen, die sich auf einen aktuellen Nutzungskontext beziehen, auf einer Anzeigevorrichtung, wobei die auswählbaren Optionen visuell auf der Anzeige zum Nachahmen des Layouts der mindestens zwei Benutzereingabezonen der Eingabevorrichtung verteilt sind,
Code zum Auswerten eines Auswahlsignals, das eine ausgewählte Option kennzeichnet, und
Code zum Erzeugen eines Anweisungssignals zum Steuern des Fahrzeugteilsystems entsprechend der ausgewählten Option.

## Revendications

1. Système d'interface de commande conçu pour fournir une commande d'un sous-système de véhicule à un conducteur d'un véhicule, le système d'interface de commande comprenant :
un dispositif d'affichage disposé dans le champ de vision du conducteur ;
un dispositif de saisie intégré dans un volant de direction et configuré pour communiquer avec le dispositif d'affichage, le dispositif de saisie incluant au moins deux zones de saisie utilisateur conçues pour recevoir une saisie d'un utilisateur,
le dispositif d'affichage répondant à un signal de commande indicatif d'une première saisie utilisateur sur l'une quelconque des zones de saisie utilisateur pour afficher des options sélectionnables relatives à un contexte d'usage actuel parmi plusieurs contextes d'usages actuels disponibles,
le système d'interface de commande étant **caractérisé en ce que**
les options sélectionnables affichées sont visuellement réparties de façon à imiter la disposition des au moins deux zones de saisie utilisateur du dispositif de saisie, où, en réponse à une deuxième saisie utilisateur, qui suit la première saisie utilisateur, sur l'une des zones de saisie utilisateur correspondant à l'une des options sélectionnables, un signal d'instruction indicatif de l'option sélectionnée est fourni à un sous-système du véhicule.

2. Système d'interface de commande selon la revendication 1, dans lequel le dispositif de saisie comporte trois zones de saisie utilisateur disposées verticalement.

3. Système d'interface de commande selon la revendication 1 ou 2, dans lequel le dispositif de saisie comporte trois zones de saisie utilisateur disposées horizontalement.

4. Système d'interface de commande selon l'une quelconque des revendications précédentes, dans lequel des zones de saisie utilisateur adjacentes sont séparées par des nervures ou des rainures.

5. Système d'interface de commande selon la revendication 4, dans lequel les zones de saisie utilisateur disposées horizontalement sont séparées par des nervures ou des rainures verticales, et les zones de saisie utilisateur disposées verticalement sont séparées par des nervures ou des rainures horizontales.

6. Système d'interface de commande selon l'une quelconque des revendications précédentes, dans lequel le contexte d'usage actuel est déterminé sur la base d'une fonction sélectionnée par l'utilisateur.

7. Système d'interface de commande selon l'une quelconque des revendications précédentes, dans lequel la première saisie utilisateur est une saisie tactile initiale, et la deuxième saisie utilisateur est un contact tactile plus fort réalisé avec une force accrue par rapport à la saisie tactile initiale.

8. Système d'interface de commande selon l'une quelconque des revendications précédentes, dans lequel le dispositif de saisie inclut un dispositif de rétroaction haptique, la deuxième saisie utilisateur étant un contact tactile plus fort, la saisie sur le dispositif de rétroaction haptique étant configurée pour générer une rétroaction haptique en réponse au contact tactile plus fort.

9. Système d'interface de commande selon l'une quelconque des revendications précédentes, dans lequel le dispositif d'affichage est un affichage tête-haute ou un affichage sur un module d'interface conducteur distinct.

10. Procédé de commande d'un sous-système de véhicule par l'intermédiaire d'un système d'interface de commande, le procédé comprenant :
la réception d'un signal de commande indicatif d'une première saisie utilisateur sur l'une quelconque d'au moins deux zones de saisie utilisateur d'un dispositif de saisie intégré dans un volant de direction,
l'affichage d'options sélectionnables relatives à un contexte d'usage actuel sur un dispositif d'affichage, les options sélectionnables étant visuellement réparties sur l'affichage de façon à imiter la disposition des au moins deux zones de saisie utilisateur du dispositif de saisie,
la réception d'un signal de sélection indicatif d'une option sélectionnée, et
la fourniture d'un signal d'instruction à un sous-système du véhicule relatif au contexte d'usage actuel pour commander le sous-système du véhicule selon l'option sélectionnée.

11. Procédé selon la revendication 10, comprenant :
la réception d'un signal de contexte indicatif du contexte d'usage actuel des sous-systèmes du véhicule, et
la sélection des options sélectionnables disponibles pour le contexte d'usage actuel, moyennant quoi les options sélectionnables sont affichées.

12. Unité de commande configurée pour :
recevoir un signal de commande indicatif d'une première saisie utilisateur sur l'une quelconque d'au moins deux zones de saisie utilisateur d'un dispositif de saisie intégré dans un volant de direction,
commander un dispositif d'affichage pour qu'il affiche des options sélectionnables relatives à un contexte d'usage actuel sur un dispositif d'affichage, les options sélectionnables étant visuellement réparties sur l'affichage de façon à imiter la disposition des au moins deux zones de saisie utilisateur du dispositif de saisie,
recevoir un signal de sélection indicatif d'une option sélectionnée, et
fournir un signal d'instruction au sous-système du véhicule pour commander le sous-système du véhicule selon l'option sélectionnée.

13. Unité de commande selon la revendication 12, configurée pour :
recevoir un signal de contexte indicatif du contexte d'usage actuel des sous-systèmes du véhicule, et
évaluer le signal de contexte pour sélectionner les options sélectionnables disponibles pour le contexte d'usage actuel, moyennant quoi les options sélectionnables sont affichées.

14. Produit de programme informatique comprenant un support lisible par ordinateur sur lequel sont stockées des moyens de programme informatique pour commander un système d'interface de commande pour un conducteur d'un véhicule selon l'une quelconque des revendications 1 à 9, le produit de programme informatique comprenant :
un code pour évaluer un signal de commande indicatif d'une première saisie utilisateur sur l'une quelconque d'au moins deux zones de saisie utilisateur d'un dispositif de saisie intégré dans un volant de direction,
un code pour commander un dispositif d'affichage pour qu'il affiche des options sélectionnables relatives à un contexte d'usage actuel sur un dispositif d'affichage, les options sélectionnables étant visuellement réparties sur l'affichage de façon à imiter la disposition des au moins deux zones de saisie utilisateur du dispositif de saisie,
un code pour évaluer un signal de sélection indicatif d'une option sélectionnée, et
un code pour générer un signal d'instruction pour commander le sous-système du véhicule selon l'option sélectionnée.
